# EUROPÄISCHE PATENTSCHRIFT

(11) **EP 1 486 572 B1**
(45) Veröffentlichungstag und Bekanntmachung des Hinweises auf die Patenterteilung: **03.10.2007**
(21) Anmeldenummer: 03013526.3
(22) Anmeldetag: 13.06.2003
(51) Int. Cl.: C21D 1/10, H05B 6/40

(54) **Vorrichtung zum induktiven Härten**
Apparatus for induction hardening
Dispositif pour le durcissement par induction

(43) Veröffentlichungstag der Anmeldung: 15.12.2004
(73) Patentinhaber: Maschinenfabrik Alfing Kessler GmbH, 73413 Aalen (DE)
(72) Erfinder: Zahn, Andreas, 79359 Riegel (DE); Schmerek, Kurt, 73434 Aalen-Dewangen (DE)
(74) Vertreter: Schmid, Wolfgang

(56) Entgegenhaltungen:
- DE-A- 2 932 438
- DE-A- 19 752 237
- DE-U- 7 230 942
- US-A- 3 784 780
- US-A- 5 451 749

## Beschreibung

Die Erfindung betrifft eine Vorrichtung zum induktiven Härten von Bauteilen, welche einen kreisförmigen Querschnitt aufweisen, insbesondere Kurbelwellen, mit zwei entlang eines Abschnitts des Umfangs des zu härtenden Bauteils angeordnete Induktorhalbschalen.

Gattungsgemäße Vorrichtungen sind aus dem allgemeinen Stand der Technik bekannt. Mittels dieser Vorrichtungen werden beispielsweise Kurbelwellen randschichtgehärtet, und zwar in der Weise, dass die beiden Induktorhalbschalen an das zu härtende Bauteil herangeführt werden und dasselbe zwischen den Induktorhalbschalen rotiert. Durch die Induktoräste der Induktorhalbschalen wird dann ein Strom geleitet, wodurch das zu härtende Bauteil erwärmt wird. Nach erfolgtem Abschrecken, was je nach Werkstoff des Bauteils mit einer wässrigen Polymerlösung oder Öl durchgeführt wird, stellt sich dann eine bestimmte Härte des Bauteils ein. Beispiele für derartige Vorrichtungen sind der DE 197 52 237 A1 und der US-A-3 784 780 zu entnehmen.

Die bekannten Vorrichtungen weisen jeweils pro Induktorhalbschale zwei Induktoräste auf, welche jeweils zu einer im wesentlichen deckungsgleichen Erwärmung des zu härtenden Bauteils durch die beiden Induktorhalbschalen führen. Die Härtezone des gehärteten Bauteils ist aus diesem Grund sehr inhomogen und wird aufgrund ihrer besonderen Form mit einer Vertiefung bzw. "Delle" in der Mitte auch als "dog bone" bezeichnet. In der praktischen Anwendung ist es aufgrund dieser inhomogenen Form der Härtezone sehr schwierig festzustellen, ob beim Härtevorgang eine ausreichende Härtetiefe erreicht wurde. Zwar lässt sich die Tiefe der Härtezone bis zu einem gewissen Grad aus der Breite derselben ableiten, aufgrund der ausgeprägten Vertiefung in der Mitte der Härtezone sind genauere Rückschlüsse jedoch als äußerst kritisch anzusehen. Daher ist es in der Praxis erforderlich, in relativ kurzen zeitlichen Abständen Schnitte durch die Härtezone vorzunehmen, um die Härtetiefe messen zu können. Diese Vorgehensweise ist jedoch zum einen sehr aufwändig und führt zum anderen stets zu einer Zerstörung des zu härtenden Bauteils.

Die beschriebene Problematik macht sich insbesondere bei Kurbelwellen negativ bemerkbar, bei welchen die zu härtenden Lagerstellen ein sehr geringes Axialmaß aufweisen, wie dies bei modernen Kurbelwellen häufiger der Fall ist.

Es ist daher Aufgabe der vorliegenden Erfindung, eine Vorrichtung zum induktiven Härten von Bauteilen mit kreisförmigem Querschnitt, insbesondere Kurbelwellen, zu schaffen, mit welcher eine homogenere Form der Härtezone und damit eine höhere Prozesssicherheit erreichbar ist.

Erfindungsgemäß wird diese Aufgabe durch die in Anspruch 1 genannten Merkmale gelöst.

Dadurch, dass erfindungsgemäß wenigstens eine der beiden Induktorhalbschalen lediglich einen Induktorast aufweist, lässt sich eine sehr viel homogenere Härtezone in dem zu härtenden Bauteil erreichen, bei der die Vertiefung in der Mitte vermieden werden kann. Durch diese homogenere Härtezone ist es möglich, von dem seitlichen Abstand der Härtezone zum Rand des Bauteils, also von der Breite der Härtezone, auf die Tiefe derselben zu schließen, wodurch aufwändige Messverfahren vermieden werden können.

Ein weiterer Vorteil besteht darin, dass die meist von Kunden vorgegebenen Toleranzen des seitlichen Abstands der Härtezone nunmehr besser ausgenutzt werden können, da auch noch bei einem relativ großen Seitenabstand und damit einer relativ schmalen Härtezone die Tiefe derselben ausreichend ist bzw. sicher erreicht wird und sich somit eine hohe Prozesssicherheit ergibt. Dadurch kann die erfindungsgemäße Vorrichtung über einen längeren Zeitraum eingesetzt werden und es ist nicht mehr so häufig erforderlich, die für die Erwärmung des Bauteils zuständigen stromdurchflossenen Induktoräste aufgrund von Abnutzung ,auszuwechseln. Die erforderlichen Voreinstellungen und Überprüfungen der Induktoräste reduzieren sich entsprechend. Aufgrund dieser Prozessreserven können vorteilhafterweise auch die zeitlichen Abstände, in denen Messungen an den zu härtenden Bauteilen vorgenommen werden, vergrößert werden.

Des weiteren wird mit der erfindungsgemäßen Vorrichtung eine verhältnismäßig genau definierte Wärmemenge in das Bauteil eingebracht, wodurch es möglich ist, das nach dem Härten meist erforderliche Anlassen des Bauteils lediglich aus derjenigen Restwärme durchzuführen, die sich noch in dem Bauteil befindet. Dadurch kann auf ansonsten notwendige Öfen, die der Härteanlage nachgeschaltet sind und in denen die Bauteile angelassen werden, verzichtet werden. Dies spart nicht nur Anschaffungskosten, sondern auch Unterhalts- und Herstellungskosten und erfordert darüber hinaus einen geringeren Platzbedarf.

Dabei ist es vorteilhafterweise möglich, die Induktorhalbschalen auch in bereits bestehende Induktionsvorrichtungen nachzurüsten. Trotz des lediglich einen Induktorasts ist bei der betreffenden Induktorhalbschale keine Leistungserhöhung erforderlich, sondern die Leistung kann aufgrund des besseren Wirkungsgrades, der sich durch die erfindungsgemäße Anordnung ergibt, gegebenenfalls sogar verringert werden. Vorteilhafterweise kann sich durch eine Verkürzung der Heizzeiten insgesamt eine Verringerung der Taktzeit ergeben.

In einer sehr vorteilhaften Weiterbildung der Erfindung kann vorgesehen sein, dass eine der Induktorhalbschalen zwei Induktoräste aufweist und dass die andere Induktorhalbschale lediglich einen Induktorast aufweist.

Mit einer solchen Anordnung lassen sich insbesondere Bauteile mit einer nicht extrem geringen Breite sehr gut härten, da diejenige Induktorhalbschale, welche die beiden Induktoräste aufweist, zum Erreichen einer ausreichenden Breite der Härtezone eingesetzt werden kann, wohingegen die Induktorhalbschale, welche lediglich einen Induktorast aufweist, so eingesetzt bzw. angeordnet werden kann, dass sich eine ausreichende Tiefe der Härtezone ergibt.

Von besonderem Vorteil ist es in diesem Zusammenhang, wenn die Induktorhalbschale, welche den einzelnen Induktorast aufweist, derart gegenüber der Induktorhalbschale, welche die beiden Induktoräste aufweist, in Längsrichtung des Bauteils versetzt angeordnet' ist, dass der einzelne Induktorast sich mittig zwischen den beiden Induktorästen befindet.

Durch die mittige Anordnung des einzelnen Induktorasts gegenüber den beiden Induktorästen wird erreicht, dass gerade in demjenigen Bereich, in dem die Härtetiefe aufgrund des Zwischenraums zwischen den beiden Induktorästen an sich geringer wäre, dennoch ausreichend hoch ist,' da der einzelne Induktorast für die ausreichende Härtetiefe sorgen kann. Ein weiterer Vorteil dieser Ausführung besteht darin, dass die Einstellbarkeit der Induktoräste bzw. der Induktorhalbschalen sehr viel einfacher ist, da die Induktorhalbschale mit dem einzelnen Induktorast lediglich mittig gegenüber der Induktorhalbschale mit den beiden Induktorästen eingestellt werden muss, wobei die Induktorhalbschale mit den beiden Induktorästen in einfacher Weise auf seitliche Kopplung eingestellt werden kann und die seitlichen Toleranzen, wie oben erwähnt, einfach eingehalten werden können.

Bei besonders schmalen zu härtenden Bauteilen bzw. Abschnitten von Bauteilen kann es vorteilhaft sein, wenn die beiden Induktorhalbschalen jeweils lediglich einen Induktorast aufweisen.

In diesem Zusammenhang kann vorgesehen sein, dass die beiden Induktorhalbschalen in Längsrichtung des zu härtenden Bauteils versetzt zueinander angeordnet sind.

Durch diese versetzte Anordnung der Induktoräste gegeneinander lässt sich die Breite der Härtezone variieren, wobei dennoch eine ausreichende Kontrollierbarkeit der Härtetiefe sichergestellt ist, solange eine bestimmte Breite des zu härtenden Bauteils nicht überschritten wird.

Weitere vorteilhafte Ausgestaltungen und Weiterbildungen der Erfindung ergeben sich aus den restlichen Unteransprüchen sowie aus den nachfolgend anhand der Zeichnung prinzipmäßig dargestellten Ausführungsbeispielen.

Es zeigt:
- Fig. 1: eine Draufsicht auf eine erfindungsgemäße Vorrichtung zur induktiven Härtung;
- Fig. 2: eine Ansicht der erfindungsgemäßen Vorrichtung gemäß dem Pfeil II aus Fig. 1;
- Fig. 3: eine schematische Darstellung der sich ergebenden Härtezone des zu härtenden Bauteils bei der Härtung durch eine Induktorhalbschale mit zwei Induktorästen;
- Fig. 4: eine schematische Darstellung der sich ergebenden Härtezone des zu härtenden Bauteils bei der Härtung durch eine Induktorhalbschale mit einem Induktorast;
- Fig. 5: eine schematische Darstellung der sich ergebenden Härtezone des zu härtenden Bauteils bei der Härtung durch die beiden Induktorhalbschalen aus Fig. 3 und Fig. 4;
- Fig. 6: eine schematische Darstellung der sich ergebenden Härtezone des zu härtenden Bauteils bei der Härtung durch eine Induktorhalbschale mit einem Induktorast;
- Fig. 7: eine schematische Darstellung der sich ergebenden Härtezone des zu härtenden Bauteils bei der Härtung durch eine Induktorhalbschale mit einem versetzt zu dem Induktorast aus Fig. 6 angeordneten Induktorast; und
- Fig. 8: eine schematische Darstellung der sich ergebenden Härtezone des zu härtenden Bauteils bei der Härtung durch die beiden Induktorhalbschalen aus Fig. 6 und Fig. 7.

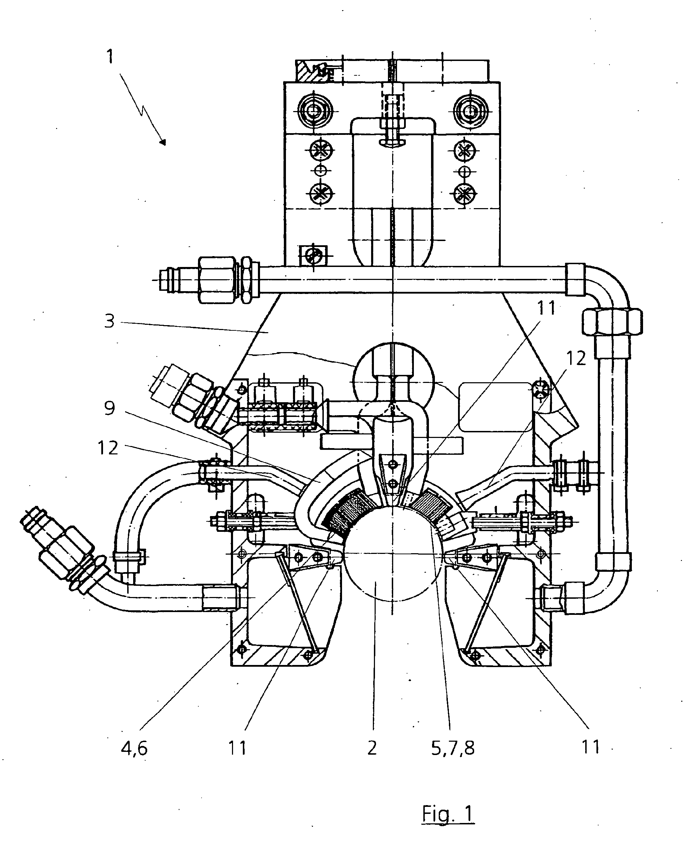

Fig. 1 zeigt eine Vorrichtung 1 zum Härten eines Bauteils 2 mit kreisförmigem Querschnitt. Bei dem Bauteil 2 kann es sich beispielsweise um eine Kurbelwelle für eine Brennkraftmaschine handeln, deren Lagerstellen mittels der Vorrichtung 1 gehärtet werden sollen. Das Bauteil 2 muss nicht notwendigerweise einen kontinuierlich kreisförmigen Querschnitt besitzen, jedoch ist der Querschnitt an der zu härtenden Stelle jeweils kreisförmig.

Die Vorrichtung 1 weist ein Gehäuse 3 auf, in welchem zwei sich entlang eines Teils des Umfangs des Bauteils 2 erstreckende Induktorhalbschalen 4 und 5 angeordnet sind. Die im vorliegenden Fall auf der linken Seite des Gehäuses 3 angeordnete erste Induktorhalbschale 4 weist einen stromdurchflossenen Leiter auf, der beispielsweise aus Kupfer besteht und als Induktorast 6 bezeichnet wird. Demgegenüber weist die im vorliegenden Fall auf der rechten Seite des Gehäuses 3 und entlang des Umfangs des Bauteils 2 um einen bestimmten Winkel gegenüber der ersten Induktorhalbschale 4 versetzte Induktorhalbschale 5 zwei im vorliegenden Fall ebenfalls aus Kupfer bestehende Induktoräste 7 und 8 auf, die ebenfalls entlang des Umfangs des Bauteils 2 verlaufen. Die Induktorhalbschalen 4 und 5 bzw. die Induktoräste 6, 7 und 8 sind mit Stromzu- und - abführleitungen versehen, die jedoch in bekannter Weise ausgeführt sein können und auf die daher nicht näher eingegangen wird. Zu erwähnen ist lediglich, dass die Induktorhalbschale 4 einen Rückleitungsast 9 aufweist, der gemeinsam mit dem Induktorast 6 für einen geschlossenen Stromkreis der Induktorhalbschale 4 sorgt. Bei der Induktorhalbschale 5 ist der geschlossene Stromkreis durch die beiden Induktoräste 7 und 8 gewährleistet, die in üblicher Weise verlaufen können.

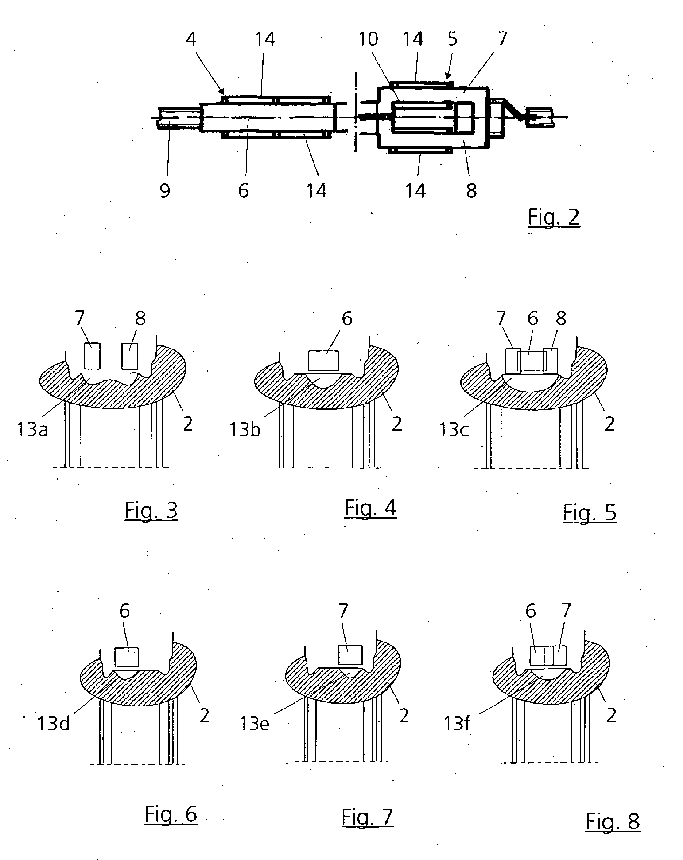

In Fig. 2 ist die unterschiedliche Ausführung der beiden Induktorhalbschalen 4 und 5 deutlicher erkennbar. So verlaufen die beiden Induktoräste 7 und 8 der Induktorhalbschale 5 mit einem Abstand voneinander und bilden einen Zwischenraum 10 zwischen sich aus. Der Induktorast 6 der Induktorhalbschale 4 ist mittig zwischen den beiden Induktorästen 7 und 8 angeordnet und deckt den Zwischenraum 10 ab. Im vorliegenden Fall ist der einzelne Induktorast 6 breiter ausgebildet als die beiden Induktoräste 7 und 8, z.B. doppelt so breit, wobei diese geometrischen Gegebenheiten im wesentlichen von dem zu härtenden Bauteil 2 abhängen. Selbstverständlich könnte der Induktorast 6 auch schmaler als der Zwischenraum 10 ausgeführt sein und denselben somit nicht abdecken. Im allgemeinen sollte der Induktorast 6 mittig gegenüber den beiden Induktorästen 7 und 8 und somit mittig gegenüber dem Zwischenraum 10 angeordnet sein.

Zum Härten des Bauteils 2 wird Strom durch die Induktoräste 6, 7 und 8 geleitet und das Bauteil 2 wird rotiert. Wenn es sich bei der zu härtenden Fläche des Bauteils 2 um eine exzentrisch zur Mittelachse angeordnete Lagerfläche, beispielsweise um eine Pleuellagerfläche, handelt, so muss die Vorrichtung 1 bei dieser Rotation eine entsprechende Bewegung ausführen, um stets einen gleichmäßigen Abstand von dem Bauteil 2, den sogenannten Kopplungsabstand, beizubehalten. Hierzu sind zwischen den beiden Induktorhalbschalen 4 und 5 sowie außerhalb derselben im vorliegenden Fall drei Gleitschuhe 11 angeordnet, die mit dem Bauteil 2 in Kontakt stehen und so für einen konstanten Kopplungsabstand sorgen. Gegebenenfalls wäre jedoch auch ein berührungsloses Mitbewegen der Vorrichtung 1 bei der Bewegung des Bauteils 2 möglich. Aufgrund des Stromflusses durch die Induktoräste 6, 7 und 8 erwärmen sich dieselben und führen durch magnetische Induktion zu einer Erwärmung des Bauteils 2, z.B. auf eine Temperatur von 950°C. Hat das Bauteil 2 eine entsprechende Temperatur erreicht, so wird mittels sogenannter Brausen 12 vorzugsweise eine wässrige Polymerlösung auf das Bauteil 2 geleitet und so für eine Abkühlung desselben gesorgt. Durch dieses Erwärmen und rasche Abkühlen des Bauteils 2 erreicht man in an sich bekannter Weise eine Gefügeveränderung innerhalb des Bauteils 2, die sich als in den Figuren 3 bis 8 dargestellte Härtezone 13a - 13f darstellt. Bei dieser Erwärmung des Bauteils 2 wird eine relativ genau definierte Wärmemenge in dasselbe eingebracht, wodurch es möglich ist, nach dem Härtevorgang das Anlassen des Bauteils 2 aus der sich noch in dem Bauteil 2 befindlichen Restwärme durchzuführen. Dies erfolgt bei der werkstoffspezifischen Anlasstemperatur.

Hierbei sind sowohl der einzelne Induktorast 6 als auch die beiden Induktoräste 7 und 8 mit Beblechungen 14 versehen, die zur Erhöhung des magnetischen Feldes und somit zu einer Verbesserung des Wirkungsgrades der Vorrichtung 1 dienen. Zur Erhöhung der Härtetiefe kann die Beblechung 14 und/oder der Kopplungsabstand verändert werden.

In Fig. 3 ist die Härtezone 13a dargestellt, welche sich ergibt, wenn das Bauteil 2 mittels der zweiten Induktorhalbschale 5, welche beide Induktoräste 7 und 8 aufweist, gehärtet werden würde. Dabei ist deutlich zu erkennen, dass die Härtezone 13a insgesamt nicht homogen ausgebildet ist und in der Mitte, also in demjenigen Bereich, in dem sich bei der Induktorhalbschale 5 der Zwischenraum 10 befindet, eine Vertiefung bzw. "Delle" aufweist. Diese Vertiefung führt zu einer Verringerung der Härtetiefe der Härtezone 13a, was die oben beschriebenen Probleme bezüglich der Qualität der Bauteile 2 zur Folge hat. Diese Form der Härtezone 13a wird im allgemeinen als "dog bone" bezeichnet und tritt auch bei Härteverfahren gemäß dem Stand der Technik auf, wenn beide Induktorhalbschalen jeweils zwei Induktoräste aufweisen.

Fig. 4 zeigt die Härtezone 13b, welche entsteht, wenn das Härteverfahren lediglich mit der ersten Induktorhalbschale 4 mit dem einen Indüktorast 6 ausgeführt werden würde. Dabei ist zu erkennen, dass die Härtezone 13b zwar eine ausreichende Tiefe aufweist, dass die Breite derselben jedoch bei der dargestellten Breite der zu härtenden Fläche des Bauteils 2 zu gering ist.

In Fig. 5 ist die Härtezone 13c dargestellt, welche sich ergibt, wenn der Härtevorgang mit den beiden unter Bezugnahme auf die Figuren 1 und 2 beschriebenen Induktorhalbschalen 4 und 5 durchgeführt wird. Es ist also eine eindeutige Überdeckung zwischen den beiden Härtezonen 13a und 13b zu erkennen, die zu der homogenen Härtezone 13c ohne Vertiefungen und mit einem im wesentlichen ebenen Verlauf im mittleren Bereich gemäß Fig. 5 führt.

Durch diese homogene Härtezone 13c kann von dem seitlichen Abstand der Härtezone 13c zum Rand des Bauteils 2 auf die Tiefe derselben geschlossen werden. Dieser seitlichen Abstand der Härtezone 13c kann beispielsweise durch Ätzen ermittelt werden, sodass eine Zerstörung des Bauteils 2 nicht notwendig ist.

Die Figuren 6, 7 und 8 zeigen weitere Härtezonen 13d, 13e und 13f, die sich ergeben, wenn die zweite Induktorhalbschale 5 der Vorrichtung 1 lediglich einen Induktorast, beispielsweise den Induktorast 7, aufweist. Die Härtezone 13d gemäß Fig. 6 ist ähnlich zu der Härtezone 13b gemäß Fig. 4 ausgebildet, da auch hier lediglich ein Induktorast, nämlich der Induktorast 6 der ersten Induktorhalbschale 4, eingesetzt wird. Dieser ist allerdings außerhalb der Mitte angeordnet.

Gleiches gilt auch für die Härtezone 13e gemäß Fig. 7, welche lediglich in Längsrichtung des Bauteils 2 gegenüber der Härtezone 13d versetzt ist, da der Induktorast 7 der zweiten Induktorhalbschale 5 gegenüber dem Induktorast 6 der ersten Induktorhalbschale 4 in Längsrichtung des Bauteils 2 versetzt ist.

Fig. 8 zeigt die Härtezone 13f, die sich ergibt, wenn das Bauteil 2 mittels der beiden Induktorhalbschalen 4 und 5 gemäß der Figuren 6 und 7 gehärtet wird. Auch hier ist erkennbar, dass die Härtezone 13f erheblich homogener ist als dies bei der Härtezone 13a der Fall ist. Durch den Versatz der beiden Induktoräste 6 und 7 der Induktorhalbschalen 4 und 5 zueinander kann in diesem Fall die Breite der Härtezone 13f bestimmt werden.

Eine Vorrichtung 1, bei der die Induktorhalbschalen 4 und 5 jeweils nur einen Induktorast 6 aufweisen, ist insbesondere dann sinnvoll, wenn die Breite der zu härtenden Fläche des Bauteils 2 sehr gering ist, beispielsweise bei sehr schmalen Lagerstellen von Kurbelwellen. In diesem Zusammenhang wäre es auch möglich, die beiden Induktorhalbschalen 4 und 5 nicht zu versetzen, sondern deckungsgleich gegenüber dem Bauteil 2 anzuordnen. Die daraus resultierende Härtezone wäre ähnlich den Härtezonen 13d und 13e gemäß der Figuren 6 und 7 und wäre für äußerst schmale zu härtende Flächen geeignet.

## Patentansprüche

1. Vorrichtung (1) zum induktiven Härten von Bauteilen (2), welche einen kreisförmigen Querschnitt aufweisen, insbesondere Kurbelwellen, mit zwei entlang eines Abschnitts des Umfangs des zu härtenden Bauteils (2) angeordneten Induktorhalbschalen (4,5),
**dadurch gekennzeichnet, dass**
wenigstens eine der beiden Induktorhalbschalen (4,5) lediglich einen stromdurchflossenen Induktorast (6) aufweist, wobei ein Rückleitungsast (9) der lediglich einen Induktorast (6) aufweisenden Induktorhalbschale (4,5) gegenüber der Oberfläche des zu härtenden Bauteils (2) zurückversetzt ist.

2. Vorrichtung nach Anspruch 1,
**dadurch gekennzeichnet, dass**
eine der Induktorhalbschalen (5) zwei Induktoräste (7,8) aufweist und dass die andere Induktorhalbschale (4) lediglich einen Induktorast (6) aufweist.

3. Vorrichtung nach Anspruch 2,
**dadurch gekennzeichnet, dass**
die Induktorhalbschale (4), welche den einzelnen Induktorast (6) aufweist, derart gegenüber der Induktorhalbschale (5), welche die beiden Induktoräste (7,8) aufweist, in Längsrichtung des Bauteils (2) versetzt angeordnet ist, dass der einzelne Induktorast (6) sich mittig zwischen den beiden Induktorästen (7,8) befindet.

4. Vorrichtung nach Anspruch 5,
**dadurch gekennzeichnet, dass**
sich zwischen den beiden Induktorästen (7,8) ein Zwischenraum (10) befindet, wobei der einzelne Induktorast (6) mittig gegenüber dem Zwischenraum (10) angeordnet ist.

5. Vorrichtung nach Anspruch 1,
**dadurch gekennzeichnet, dass**
die beiden Induktorhalbschalen (4,5) jeweils lediglich einen Induktorast (6,7) aufweisen.

6. Vorrichtung nach Anspruch 5,
**dadurch gekennzeichnet, dass**
die beiden Induktorhalbschalen (4,5) in Längsrichtung des zu härtenden Bauteils (2) versetzt zueinander angeordnet sind.

7. Vorrichtung nach einem der Ansprüche 1 bis 6,
**dadurch gekennzeichnet, dass**
zwischen den beiden Induktorhalbschalen (4,5) und außerhalb der beiden Induktorhalbschalen (4,5) jeweils Gleitschuhe (11) angeordnet sind, welche dafür vorgesehen sind, mit dem zu härtenden Bauteil (2) in Kontakt zu treten.

8. Vorrichtung nach einem der Ansprüche 1 bis 6,
**dadurch gekennzeichnet, dass**
die Induktorhalbschalen (4,5) als berührungslos arbeitende Induktorhalbschalen (4,5) ausgebildet sind.

## Claims

1. Device (1) for the inductive hardening of structural parts (2) having a semicircular cross-section, in particular crankshafts, with two inductor half-shells (4, 5) arranged along a section of the circumference of the structural part (2) to be hardened, **characterised in that** at least one of the two inductor half-shells (4, 5) simply comprises an inductor branch (6) through which current flows, wherein a return branch (9) of the inductor half- shell (4, 5) simply comprising an inductor branch (6) is displaced rearwardly relative to the surface of the structural part (2) to be hardened.

2. Device according to claim 1, **characterised in that** one of the inductor half-shells (5) comprises two inductor branches (7, 8) and that the other inductor half- shell (4) simply comprises an inductor branch (6).

3. Device according to claim 2, **characterised in that** the inductor half-shell (4) which comprises the individual inductor branch (6) is arranged displaced in the longitudinal direction of the structural part (2) with respect to the inductor half-shell (5) which comprises the two inductor branches (7, 8), in such a way that the individual inductor branch (6) is located centrally between the two inductor branches (7, 8).

4. Device according to claim 5, **characterised in that** an intermediate space (10) is located between the two inductor branches (7, 8), wherein the individual inductor branch (6) is arranged centrally with respect to the said intermediate space (10).

5. Device according to claim 1, **characterised in that** the two inductor half-shells (4, 5) in each case simply comprise an inductor branch (6, 7).

6. Device according to claim 5, **characterised in that** the two inductor half-shells (4, 5) are arranged displaced with respect to one another in the longitudinal direction of the structural part (2) to be hardened.

7. Device according to one of claims 1 to 6, **characterised in that** in each case guide shoes (11) are arranged between the two inductor half-shells (4, 5) and outside the two inductor half-shells (4, 5), which guide shoes are provided so as to come into contact with the structural part (2) to be hardened.

8. Device according to one of claims 1 to 6, **characterised in that** the inductor half-shells (4, 5) are designed as contactless working inductor half-shells (4, 5).

## Revendications

1. Dispositif (1) pour la trempe par induction de pièces (2) qui présentent une section circulaire, en particulier de vilebrequins, comportant deux demi-coquilles d'inducteur (4, 5) disposées le long d'un segment de la périphérie de la pièce à tremper (2),
**caractérisé en ce que**
au moins une des deux demi-coquilles d'inducteur (4, 5) comporte seulement une branche d'inducteur (6) parcourue par le courant, tandis qu'une branche de retour (9) de la demi-coquille d'inducteur (4, 5) qui comporte seulement une branche d'inducteur (6) est en retrait par rapport à la surface de la pièce à tremper (2).

2. Dispositif selon la revendication 1,
**caractérisé en ce que**
une des demi-coquilles d'inducteur (5) comporte deux branches d'inducteur (7, 8) et **en ce que** l'autre demi-coquille d'inducteur (4) comporte seulement une branche d'inducteur (6).

3. Dispositif selon la revendication 2,
**caractérisé en ce que**
la demi-coquille d'inducteur (4) qui comporte la branche d'inducteur unique (6) est disposée avec un décalage par rapport à la demi-coquille d'inducteur (5) qui comporte les deux branches d'inducteur (7, 8) dans la direction longitudinale de la pièce (2) de telle manière que la branche d'inducteur unique (6) se trouve en position médiane entre les deux branches d'inducteur (7, 8).

4. Dispositif selon la revendication 5,
**caractérisé en ce que**
un espace intermédiaire (10) se trouve entre les deux branches d'inducteur (7, 8), la branche d'inducteur unique (6) étant disposée en position médiane par rapport à l'espace intermédiaire (10).

5. Dispositif selon la revendication 1,
**caractérisé en ce que**
les deux demi-coquilles d'inducteur (4, 5) comportent chacune seulement une branche d'inducteur (6, 7) .

6. Dispositif selon la revendication 5,
**caractérisé en ce que**
les deux demi-coquilles d'inducteur (4, 5) sont décalées l'une par rapport à l'autre dans la direction longitudinale de la pièce à tremper (2).

7. Dispositif selon l'une des revendications 1 à 6,
**caractérisé en ce que**
entre les deux demi-coquilles d'inducteur (4, 5) et en dehors des deux demi-coquilles d'inducteur (4, 5) sont disposés respectivement des patins (11) qui sont prévus pour entrer en contact avec la pièce à tremper (2).

8. Dispositif selon l'une des revendications 1 à 6,
**caractérisé en ce que**
les demi-coquilles d'inducteur (4, 5) forment des demi-coquilles d'inducteur (4, 5) travaillant sans contact.
